(19) **Europäisches Patentamt** / **European Patent Office** / **Office européen des brevets**

(11) **EP 4 249 289 B1**

(12) **EUROPEAN PATENT SPECIFICATION**

(45) Date of publication and mention
of the grant of the patent:
**20.08.2025 Bulletin 2025/34**

(21) Application number: **21894234.0**

(22) Date of filing: **30.04.2021**

(51) International Patent Classification (IPC):
**B60C 11/00** *(2006.01)*    **B60C 11/01** *(2006.01)*
**B60C 9/00** *(2006.01)*    **B60C 9/26** *(2006.01)*
**B60C 9/08** *(2006.01)*    **B60C 9/18** *(2006.01)*
**B60C 9/22** *(2006.01)*

(52) Cooperative Patent Classification (CPC):
**B60C 9/263; B60C 9/2204; B60C 11/0083;**
B60C 11/01; B60C 2200/02

(86) International application number:
**PCT/JP2021/017280**

(87) International publication number:
**WO 2022/107357 (27.05.2022 Gazette 2022/21)**

(54) **PNEUMATIC TIRE FOR AIRCRAFT**

LUFTREIFEN FÜR FLUGZEUGE

PNEUMATIQUE POUR AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2020 JP 2020192349**

(43) Date of publication of application:
**27.09.2023 Bulletin 2023/39**

(73) Proprietor: **BRIDGESTONE CORPORATION**
**Chuo-ku**
**Tokyo 104-8340 (JP)**

(72) Inventors:
• **ICHIHARA, Eiji**
**Tokyo 104-8340 (JP)**
• **KOCHI, Naoto**
**Tokyo 104-8340 (JP)**
• **TAMURA, Juntarou**
**Tokyo 104-8340 (JP)**

(74) Representative: **Marks & Clerk LLP**
**15 Fetter Lane**
**London EC4A 1BW (GB)**

(56) References cited:
WO-A1-2006/035940    WO-A1-2010/100856
FR-A1- 2 187 559    JP-A- 2006 224 729
JP-A- 2007 182 102    JP-A- 2018 086 984
KR-A- 20060 005 938    US-A- 4 445 560

**Description**

TECHNICAL FIELD

This invention relates to a pneumatic tire for aircraft.

BACKGROUND

Conventionally, the pneumatic tires for aircraft have been proposed: which have a pair of bead cores, a radial carcass comprising one or more carcass plies extending toroidally between the bead cores, and a belt layer as a tread reinforcement member on the radial outer side of the radial carcass in the tread portion; the above belt layer consists of a spiral belt layer made of ribbon-like organic fibers wound in an abbreviated circumferential direction, 5 degrees or less to the tire equatorial plane, and a zigzag belt layer made of ribbon-like organic fibers wound at an angle of 2 to 45 degrees to the tire equatorial plane and folded at both ends of the belt; and the shape of the outer surface of the tread has a predetermined step-down amount δ at the intermediate land portion (PTL 1).

CITATION LIST

Patent Literature

PTL 1: 2012-153310

SUMMARY

(Technical Problem)

In recent years, increased environmental awareness has led to strong demand for longer tire life also in pneumatic tires for aircraft. Improving the wear resistance performance of the tire is effective in extending tire life. Here, it is known that the wear on the pneumatic tires for aircraft occurs mainly in the following two modes: One is the wear that occurs when an aircraft moves through an airport, so-called "taxi wear", and the other is the wear caused by slippage when stationary tires contact the asphalt at high speed at the moment the aircraft lands, so-called "touchdown wear".
The art described in PTL 1 is effective in improving the above taxi wear. However, when the shape of the outer surface of the tread as described in PTL 1 is applied, the ground contact width under extreme loads at the moment the aircraft lands become smaller. As a result, wear in the center of the tire progressed quickly, and in some cases, performance was not sufficient with respect to touchdown wear.
It is therefore an object of the invention to provide a pneumatic tire for aircraft that can suppress the wear that occurs when moving through airports, while also suppressing the wear that occurs at extremely low loads at the moment the aircraft lands.

(Solution to Problem)

The present invention provides a pneumatic tire for aircraft comprising:

a pair of bead portions; a carcass comprising one or more carcass plies spanning the pair of bead portions in a toroidal shape; and a belt comprising one or more belt layers disposed radially outwardly of the crown portion of the carcass; wherein
in a reference state, in which the pneumatic tire for aircraft is mounted on an applicable rim, filled to prescribed internal pressure, deflated to 50 kPa after that, and with no load,
Rc is the radius at the outer surface of the tire at the tire equatorial plane, and Wb is the distance in the tire width direction from the tire equatorial plane to the edge of the widest belt layer that has the greatest width in the tire width direction,
the diameter difference between the outer surface of the tire at the tire equatorial plane and the outer surface of the tire at a position 35% of the distance Wb outward from the tire equatorial plane in the tire width direction is $\delta 35$,
the diameter difference between the outer surface of the tire at the tire equatorial plane and the outer surface of the tire at a position 90% of the distance Wb outward from the tire equatorial plane in the tire width direction is $\delta 90$, and the following inequalities are satisfied.

$$0 \leq \delta 35/Rc \leq 0.004 \text{ and } 0.015 \leq \delta 90/Rc \leq 0.025$$

As used herein, "applicable rim" refers to the standard rim (Design Rim) in the applicable size as described or as may be described in the future in the latest edition of the AIRCRAFT YEAR BOOK or the latest edition of the EDI (Engineering Design Information for Aircraft Tires) published by TRA (The Tire and Rim Association, Inc.) in the United States (the 2017 edition is used for numerical descriptions herein). For sizes not listed in the above standards, "applicable rim" shall mean the rim applicable to the tire.

In addition, "prescribed internal pressure" means the air pressure, i.e., maximum air pressure, corresponding to the maximum load capacity of a single wheel in the applicable size and ply rating, as described in the above standard. For sizes not listed in the above standards, "prescribed internal pressure" shall mean the air pressure, i.e., maximum air pressure, corresponding to the maximum load capacity prescribed for each vehicle in which the tire is mounted.

In the case where the tread section has grooves, the above outer surface of the tire shall mean the hypothetical line assuming there are no grooves.

The elastic modulus of the belt cord herein refers to the elastic modulus of a single cord (cN/dtex) calculated from the slope "s-s curve" when a single cord is elongated by 1.5% in accordance with the standard number JIS L 1017:2002, "Test Method for Chemical Fiber Tire Cords".

(Advantageous Effect)

The present invention can provide a pneumatic tire for aircraft that can suppress the wear that occurs when moving through airports, while also suppressing the wear that occurs at extremely low loads at the moment the aircraft lands.

BRIEF DESCRIPTION OF THE DRAWINGS

In the accompanying drawings:

FIG. 1 illustrates a cross-sectional view in the tire width direction of a pneumatic tire for aircraft according to one embodiment of the invention;

FIG. 2 illustrates an enlarged view of the main part of FIG. 1;

FIG. 3 illustrates the spiral belt layer; and

FIG. 4 illustrates the zigzag belt layer.

DETAILED DESCRIPTION

The following is a detailed illustrative description, with reference to the drawings, of an embodiment of a pneumatic tire for aircraft, hereinafter referred to simply as "tire", according to the invention.

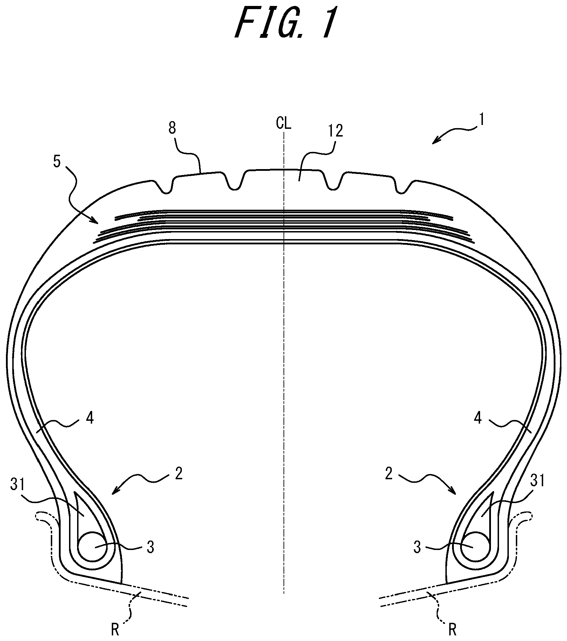

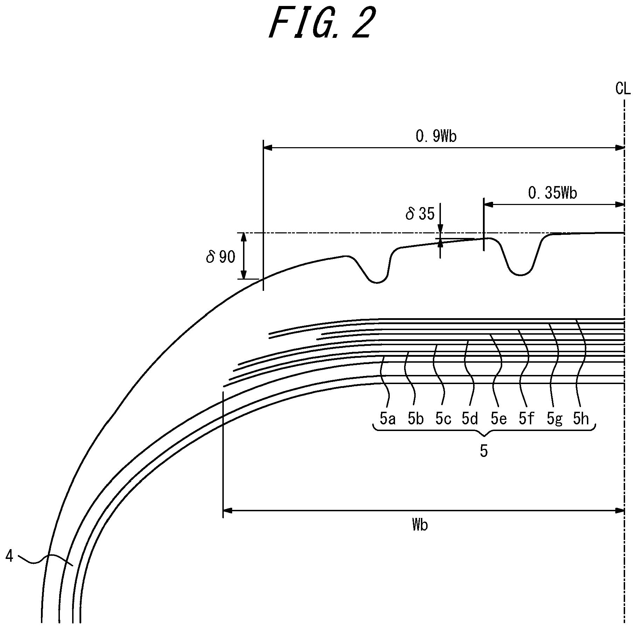

Figure 1 illustrates a cross-sectional view in the tire width direction of a pneumatic tire for aircraft according to one embodiment of the invention. Figure 2 illustrates an enlarged view of the main part of Figure 1. Figures 1 and 2 illustrate the cross section in the tire width direction in the reference state, with the tire 1 mounted on the applicable rim R, filled to the prescribed internal pressure, and unloaded.

As illustrated in Figure 1, the tire 1 comprises a pair of bead portions 2, a carcass 4 comprising one or more carcass plies spanning the pair of bead portions 2 in a toroidal shape, and a belt 5 comprising one or more belt layers disposed radially outwardly of the crown portion of the carcass 4. A tread portion 12 made of tread rubber is disposed on the outside of the tire radial direction of the belt, and a pair of sidewall portions are connected to the tread portion.

The bead core 3 is buried in each of the bead portions 2. In the illustrated example, the bead core 3 consists of an annular cable bead. In the illustration, the bead core 3 is circular in cross section. The bead wire can be, for example, high-carbon steel wire. In this example, the bead filler 31 is disposed on the outer side, in the tire radial direction, of each bead cores 3. The bead filler 31 has an abbreviated triangular cross section, tapering in the tire width direction from the inside to the outside of the tire radial direction, but the bead filler 31 can have a variety of cross sections. For example, one or more types of any known hard rubber can be used for the bead filler 31.

The carcass 4 consists of one or more, e.g., 4 to 7, carcass plies. In this example, the carcass 4 is a radial carcass.

The carcass 4 consists of one or more overlapping carcass plies, for example 4 to 7 carcass plies are overlapped, and their ends are rolled up and secured around the bead core 3 from the inside to the outside in the tire radial direction. In this embodiment of tire 1, seven layers of carcass plies made of nylon cords are stacked on top of each other.

As illustrated in Figures 1 and 2, in this example, the belt 5 consists of 8 belt layers 5a-5h. In this example, the belt 5 has six spiral belt layers 5a-5f and two zigzag belt layers 5g and 5h disposed outside the spiral belt layers in the tire radial direction. However, the number of belt layers is not limited to the above; for example, the number of spiral belt layers can be 1 to 8, and the number of zigzag belt layers can be 2 to 4. From the viewpoint of weight reduction, the total number of belt layers is preferably 10 or less. The belt structure is also not limited to those described above; for example, an inclined belt layer can also be used, in which the belt cords cross each other between layers, at an angle of inclination of, for example, 30 degrees to 60 degrees to the tire circumferential direction.

In the illustrated example, the width of the belt layers in the tire width direction is, in order from largest to smallest width, 5a, 5b, 5c, 5d, 5g=5h, 5e, and 5f. In the illustration, the belt layer 5a is the widest belt layer with the greatest width in the tire width direction. The distance in the tire width direction from the tire equatorial plane CL to the edge of the widest belt layer 5a is Wb. Note that, the width of the belt layers is not limited to the above examples, and any of the belt layers may have the maximum width in the tire width direction, and the relationship between the widths of the belt layers other than the widest belt layer in the tire width direction is not particularly limited.

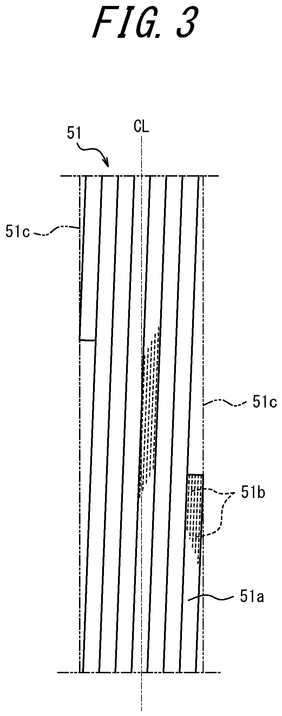

Here, the spiral belt layer is explained. Figure 3 illustrates the spiral belt layer. As illustrated in Figure 3, the spiral belt layer 51 consists of a ribbon-like first strip member 51a made with a first belt cord 51b coated with rubber, spirally wound in the circumferential direction of the tire.

As the first belt cord 51b, an organic fiber cord made of aromatic polyamide such as aramid can be used, alternatively, a hybrid fiber cord made from aliphatic polyamide such as nylon or the combinations of aromatic polyamide such as aramid and aliphatic polyamide such as nylon can be used.

The hybrid cord of aliphatic and aromatic polyamide fibers may be made by twisting yarns made of aliphatic polyamide fibers with yarns made of aromatic polyamide fibers, or made of pre-composited and twisted yarns of aliphatic and aromatic polyamide fibers.

The spiral belt layer 51 is formed by spirally winding the strip members 51a around the circumferential direction of the tire on the crown of the carcass 4 of the raw tire, with the strip members 51a deviating by a predetermined amount in the tire width direction so that no gap is created between adjacent strip members 51a. The inclination angle of the first belt cord 51b with respect to the circumferential direction of the tire is, for example, 5 degrees or less.

When the spiral belt layer 51 consists of multiple layers, the strip member 51a is folded back when it is wound up to the widthwise end edge 51c of the spiral belt layer 51 and begins to be wound around the outer surface as the next layer toward the other widthwise end edge 51c, thereby stacking them.

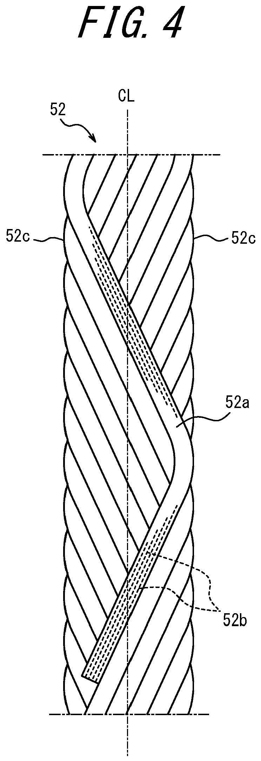

Next, the zigzag belt layer is explained. Figure 4 illustrates the zigzag belt layer. The zigzag belt layer 52 consists of a ribbon-like second strip member 52a made with a second belt cord 52b coated with rubber, spirally wound in the circumferential direction of the tire so that the following manners are repeated: extending from one tire width direction end 52c to the other tire width direction end 52c, folded back at the other tire width direction end 52c, extending from the other tire width direction end 52c to the one tire width direction end 52c, folded back at the one tire width direction end 52c, and extending again from the one tire width direction end 52c to the other tire width direction end 52c.

As the second belt cord 52b, an organic fiber cord made of aromatic polyamide such as aramid can be used, alternatively, a hybrid fiber cord made from aliphatic polyamide such as nylon or the combinations of aromatic polyamide such as aramid and aliphatic polyamide such as nylon can be used.

The hybrid cord of aliphatic and aromatic polyamide fibers may be made by twisting yarns made of aliphatic polyamide fibers with yarns made of aromatic polyamide fibers, or made of pre-composited and twisted yarns of aliphatic and aromatic polyamide fibers.

Return to Figure 1 and 2, in the tire of this embodiment, in a reference state, Rc is the radius at the outer surface 8 of the tire at the tire equatorial plane CL, and Wb is the distance in the tire width direction from the tire equatorial plane CL to the edge of the widest belt layer 5a that has the greatest width in the tire width direction, the diameter difference, radius difference, between the outer surface 8 of the tire at the tire equatorial plane CL and the outer surface 8 of the tire at a position 35% of the distance Wb outward from the tire equatorial plane CL in the tire width direction is $\delta 35$, the diameter difference between the outer surface 8 of the tire at the tire equatorial plane CL and the outer surface 8 of the tire at a position 90% of the distance Wb outward from the tire equatorial plane CL in the tire width direction is $\delta 90$, and the following inequalities are satisfied:

$$0 \leq \delta 35/\mathrm{Rc} \leq 0.004 \text{ and } 0.015 \leq \delta 90/\mathrm{Rc} \leq 0.025$$

The following is an explanation of the effects of this embodiment of pneumatic tire for aircraft.

According to the pneumatic tire for aircraft of this embodiment, first, by setting $\delta 35/\mathrm{Rc} \leq 0.004$ (relatively small), the ground contact width at very low load immediately after the touchdown can be secured and the touchdown wear can be suppressed. Also, by setting $\delta 90/\mathrm{Rc} \leq 0.025$ (relatively small), the drag due to the diameter difference at the shoulder portion of the tire during taxiing can be reduced, thus the taxi wear can also be suppressed. Furthermore, by setting $\delta 90/\mathrm{Rc} \geq 0.015$, the belt tension at the shoulder portion can be increased to improve standing wave performance. In addition, by

setting $0 \leq \delta35/Rc$, the tire can be grounded around the tire equatorial plane.

As described above, the pneumatic tire for aircraft according to this embodiment can suppress the wear that occurs when moving through airports, while also suppressing the wear that occurs at extremely low loads at the moment the aircraft lands, and it can also improve the standing wave performance.

For the same reasons as above, in the reference state, it is more preferable to satisfy the following inequality:

$0 \leq \delta35/Rc \leq 0.002$ and $0.018 \leq \delta90/Rc \leq 0.023$

Further, in the reference state, it is preferable to further satisfy the following inequality:

$$0.014 \leq (\delta90\text{-}\delta35)/Rc \leq 0.024$$

By setting $(\delta90\text{-}\delta35)/Rc \leq 0.024$, the taxi wear can further be suppressed, while by setting $0.014 \leq (\delta90\text{-}\delta35)/Rc$, the standing wave performance can be further improved.

For the same reasons, in the reference state, it is further preferable to satisfy the following inequality:

$$0.016 \leq (\delta90\text{-}\delta35)/Rc \leq 0.022$$

Here, it is preferable that in one or more of the belt layers, the belt cords with an elastic modulus of 30 cN/dtex or greater extend at an angle of inclination of 10 degrees or less with respect to the tire equatorial plane. This is because the circumferential stiffness of the belt layer is increased to ensure that the tire shape is more reliably maintained when the prescribed internal pressure is filled, and each of the above effects can be obtained more reliably. For example, one or more of the belt layers can be the spiral belt layer described above. In this case, in order to achieve the above elastic modulus in the belt layer, it is preferable to use a hybrid cord of nylon and aramid, although not particularly limited.

For the same reason, in the above case, it is further preferred that the elastic modulus of the belt cord is 100 cN/dtex or greater. In this case, in order to achieve the above elastic modulus in the belt layer, it is preferable to use a aramid cord, although not particularly limited.

Here, it is preferable that the above distance Wb is 70 to 90% of the maximum tire width (the maximum width in the tire width direction of the tire in the above standard condition). By setting the minimum 70%, the standing wave can further be suppressed, while by setting the maximum 90%, the weight can be reduced.

EXAMPLES

In order to confirm the effect of the invention, an example tire, and a comparative example tire, having a tire size of H44.5×16.5×R21 were manufactured as prototypes. The example and comparative example tires have a carcass consisting of five carcass plies made of nylon. The example and comparative example tires have a belt structure with six spiral belt layers and two zigzag belt layers, from the inner side in the tire radial direction. In the example and comparative example tires, the belt cords of the zigzag belt layer were nylon cords, and the belt cords of the spiral belt layer were aramid cords. In the example and comparative example tires, the distance Wb was 150 mm and Rc was 573 mm. For the comparative example tire, $\delta35/Rc = 0.0080$, $\delta90/Rc = 0.031$, and $(\delta90\text{-}\delta35)/Rc = 0.023$. For the example tire, $\delta35/Rc = 0.0016$, $\delta90/Rc = 0.021$, and $(\delta90\text{-}\delta35)/Rc = 0.020$.

The following tests were conducted on the example and comparative example tires:

<Taxi wear>

Predicted wear energy was calculated by the Finite Element Method and expressed as an index with the comparative example set at 100. The smaller the index, the slower the wear rate and the better the wear performance.

<Touchdown wear resistance performance>

The touchdown phenomenon was simulated, and the amount of wear per touchdown at the tire equatorial plane was calculated and expressed as an index with the comparative example set at 100. The smaller the index, the better the wear performance.

<Standing wave performance>

A drum test was conducted to simulate tire inputs during takeoff. A video camera was used to capture the side portion of the tire and measure the speed at which the standing wave occurred. The index is expressed as an index with the comparative example set at 100. The larger the index, the greater the speed of standing wave generation and the better the standing wave performance.

The evaluation results for the example were as follows. Wear resistance performance during turning: 94, Touchdown wear resistance performance: 78, Standing wave performance: 100.

REFERENCE SIGNS LIST

1	pneumatic tire for aircraft
2	bead portion
3	bead core
4	carcass
5	belt
8	outer surface of the tire
12	tread portion
R	applicable rim

**Claims**

1. A pneumatic tire for aircraft (1) comprising:

   a pair of bead portions (2);
   a carcass (4) comprising one or more carcass plies spanning the pair of bead portions (2) in a toroidal shape; and
   a belt (5) comprising one or more belt layers (5a-5h) disposed radially outwardly of the crown portion of the carcass (4); **characterised in that**
   in a reference state, in which the pneumatic tire for aircraft (1) is mounted on an applicable rim (R) which is the design rim, filled to prescribed internal pressure, deflated to 50 kPa after that, and with no load,
   Rc is the radius at the outer surface (8) of the tire (1) at the tire equatorial plane (CL), and Wb is the distance in the tire width direction from the tire equatorial plane (CL) to the edge of the widest belt layer (5a) that has the greatest width in the tire width direction,
   the diameter difference between the outer surface (8) of the tire (1) at the tire equatorial plane (CL) and the outer surface (8) of the tire (1) at a position 35% of the distance Wb outward from the tire equatorial plane (CL) in the tire width direction is $\delta35$,
   the diameter difference between the outer surface (8) of the tire (1) at the tire equatorial plane (CL) and the outer surface (8) of the tire (1) at a position 90% of the distance Wb outward from the tire equatorial plane (CL) in the tire width direction is $\delta90$, and
   the following inequalities are satisfied.

   $$0 \le \delta35/Rc \le 0.004 \text{ and } 0.015 \le \delta90/Rc \le 0.025$$

2. The pneumatic tire for aircraft (1) according to claim 1, wherein in the reference state, the following inequality is further satisfied.

   $$0.014 \le (\delta90-\delta35)/Rc \le 0.024$$

3. The pneumatic tire for aircraft (1) according to claim 1 or 2, wherein in one or more of the belt layers, belt cords with an elastic modulus of 30 cN/dtex or greater extend at an angle of inclination of 10 degrees or less with respect to the tire equatorial plane.

4. The pneumatic tire for aircraft (1) according to claim 3, wherein the elastic modulus of the belt cord is 100 cN/dtex or greater.

**Patentansprüche**

1.  Luftreifen für ein Luftfahrzeug (1), umfassend:

    ein Paar von Wulstabschnitten (2);
    eine Karkasse (4), umfassend eine oder mehrere Karkassenlagen, die das Paar von Wulstabschnitten (2) in Ringform überspannen; und
    einen Gürtel (5), umfassend einen oder mehrere Gürtelschichten (5a-5h), die radial nach außen des Laufflächenmittenabschnitts der Karkasse (4) angeordnet sind; **dadurch gekennzeichnet, dass**
    in einem Referenzzustand, in dem der Luftreifen für ein Luftfahrzeug (1) auf einer geeigneten Felge (R) montiert ist, wobei es sich um die Design-Felge handelt, auf einen vorgeschriebenen Innendruck gefüllt wird, danach, und ohne Last, auf 50 kPa entleert wird,
    Rc der Radius an der Außenfläche (8) des Reifens (1) an der Reifenäquatorebene (CL) ist, und Wb der Abstand, in der Reifenbreitenrichtung, von der Reifenäquatorebene (CL) zur Kante der breitesten Gürtelschicht (5a) ist, die die größte Breite in der Reifenbreitenrichtung aufweist,
    die Durchmesserdifferenz zwischen der Außenfläche (8) des Reifens (1) an der Reifenäquatorebene (CL) und der Außenfläche (8) des Reifens (1) an einer Position 35 % des Abstands Wb von der Reifenäquatorebene (CL) nach außen in der Reifenbreitenrichtung $\delta35$ beträgt,
    die Durchmesserdifferenz zwischen der Außenfläche (8) des Reifens (1) an der Reifenäquatorebene (CL) und der Außenfläche (8) des Reifens (1) an einer Position 90 % des Abstands Wb von der Reifenäquatorebene (CL) nach außen in der Reifenbreitenrichtung $\delta90$ beträgt, und
    die folgenden Ungleichungen erfüllt sind:

    $$0 \leq \delta35/\mathrm{Rc} \leq 0{,}004 \text{ und } 0{,}015 \leq \delta90/\mathrm{Rc} \leq 0{,}025$$

2.  Luftreifen für ein Luftfahrzeug (1) nach Anspruch 1, wobei im Referenzzustand ferner die folgende Ungleichung erfüllt ist

    $$0{,}014 \leq (\delta90 - \delta35)/\mathrm{Rc} \leq 0{,}024$$

3.  Luftreifen für ein Luftfahrzeug (1) nach Anspruch 1 oder 2, wobei sich in einer oder mehreren der Gürtelschichten Gürtelseile mit einem Elastizitätsmodul von 30 cN/dtex oder mehr in einem Neigungswinkel von 10 Grad oder weniger in Bezug auf die Reifenäquatorebene erstrecken.

4.  Luftreifen für ein Luftfahrzeug (1) nach Anspruch 3, wobei das Elastizitätsmodul des Gürtelseils 100 cN/dtex oder mehr beträgt.

**Revendications**

1.  Bandage pneumatique pour aéronef (1) comprenant :

    une paire de portions de talon (2),
    une carcasse (4) comprenant un ou plusieurs plis de carcasse enjambant la paire de portions de talon (2) selon une forme toroïdale, et
    une ceinture (5) comprenant une ou plusieurs couches de ceinture (5a-5h) disposées radialement vers l'extérieur de la portion de sommet de la carcasse (4) ; **caractérisé en ce que**
    dans un état de référence dans lequel le bandage pneumatique pour aéronef (1) est monté sur une jante en vigueur (R) constituant la jante de conception, gonflé à une pression interne prescrite puis dégonflé à 50 kPa, et sans charge,
    Rc est le rayon à la surface extérieure (8) du pneumatique (1) au niveau du plan équatorial du pneumatique (CL), et Wb est la distance dans la direction de la largeur du pneumatique depuis le plan équatorial du pneumatique (CL) jusqu'au bord de la couche de ceinture la plus large (5a) qui présente la plus grande largeur dans la direction de la largeur du pneumatique,
    la différence de diamètre entre la surface extérieure (8) du pneumatique (1) au niveau du plan équatorial du pneumatique (CL) et la surface extérieure (8) du pneumatique (1) au niveau d'une position à 35 % de la distance

7

Wb, vers l'extérieur à partir du plan équatorial du pneumatique (CL) dans la direction de la largeur du pneumatique, est de $\delta 35$,

la différence de diamètre entre la surface extérieure (8) du pneumatique (1) au niveau du plan équatorial du pneumatique (CL) et la surface extérieure (8) du pneumatique (1) au niveau d'une position à 90 % de la distance Wb, vers l'extérieur à partir du plan équatorial du pneumatique (CL) dans la direction de la largeur du pneumatique, est de $\delta 90$, et

les inégalités suivantes sont satisfaites :

$$0 \leq \delta 35/\text{Rc} \leq 0,004 \text{ et } 0,015 \leq \delta 90/\text{Rc} \leq 0,025$$

2. Bandage pneumatique pour aéronef (1) selon la revendication 1, dans lequel, dans l'état de référence, l'inégalité suivante est en outre satisfaite :

$$0,014 \leq (\delta 90 - \delta 35)/\text{Rc} \leq 0,024$$

3. Bandage pneumatique pour aéronef (1) selon la revendication 1 ou 2, dans lequel, dans une ou plusieurs des couches de ceinture, des câbles de ceinture d'un module d'élasticité de 30 cN/dtex ou plus s'étendent à un angle d'inclinaison de 10 degrés ou moins par rapport au plan équatorial du pneumatique.

4. Bandage pneumatique pour aéronef (1) selon la revendication 3, dans lequel le module d'élasticité du câble de ceinture est de 100 cN/dtex ou plus.

# FIG. 1

FIG. 2

EP 4 249 289 B1

# FIG. 3

11

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012153310 A

**Non-patent literature cited in the description**

- EDI (Engineering Design Information for Aircraft Tires). TRA (The Tire and Rim Association, Inc.), 2017